# EUROPÄISCHE PATENTSCHRIFT

(11) **EP 2 045 476 B1**
(45) Veröffentlichungstag und Bekanntmachung des Hinweises auf die Patenterteilung: **20.08.2014**
(21) Anmeldenummer: 08015821.5
(22) Anmeldetag: 09.09.2008
(51) Int. Cl.: F16C 19/28, F16C 35/06

(54) **Lager**
Bearing
Roulement

(30) Priorität: 19.09.2007 DE 102007044702
(43) Veröffentlichungstag der Anmeldung: 08.04.2009
(73) Patentinhaber: AB SKF, 415 50 Göteborg (SE)
(72) Erfinder: Reichert, Jürgen, 3350 Haag (AT)
(74) Vertreter: Kohl, Thomas

(56) Entgegenhaltungen:
- DE-A1-102004 038 504
- DE-U1- 8 915 623
- DE-U1- 9 315 501
- US-A- 679 465
- US-A- 2 977 163
- US-A1- 2003 236 148

## Beschreibung

Die Erfindung betrifft ein Lager mit einem Innenring und einem Außenring, wobei zwischen den Ringen Wälzkörper angeordnet sind, wobei der Innenring als massives Wellenteil ausgeführt ist, das an seinem äußeren Umfang mindestens eine Laufbahn für die Wälzkörper hat und das sich in Achsrichtung erstreckende Befestigungsbohrungen aufweist, wobei die Befestigungsbohrungen von der Drehachse des Innenrings radial versetzt angeordnet sind.

Ein gattungsgemäßes Lager ist aus der US 2003/0236148 A1, aus der DE 89 15 623 U1, aus der US 2,977,163 und aus der US 679,465 bekannt. Ähnliche Lösungen zeigen die DE 10 2004 038 504 A1 und die DE 93 15 501 U1.

Im Betrieb eines solchen Lagers gehen in vielen Fällen der Verbrauch von Treibstoff und die Emission von Kohlendioxid direkt mit der entstehenden Reibung im Lager einher. Insbesondere im Maschinenbau schwerer Maschinen, wie z. B. der Lagerung einer Betonmischwagen-Trommel, werden bislang häufig Gleitlagerungen eingesetzt, die bezüglich Energieverbrauch und CO₂-Emission ungünstig sind. Sofern Kegelrollenlager zur Lagerung derartiger Maschinenelemente eingesetzt werden, kann zwar die Reibung herabgesetzt werden, jedoch ist in diesen Fällen meist eine relativ aufwändige Abstimmung des Lagers erforderlich. Ein Kegelrollenlager benötigt zudem relativ viel Bauraum.

Wenn ein Zahnrad zu lagern ist, ist hierfür ein hohes Widerstandmoment gegen Kippen erforderlich, um ein einwandfreies Kämmen des Zahnrads mit einem Gegenrad sicherzustellen. Das gilt insbesondere beim Einsatz von Schrägverzahnungen. Bei bekannten Lageranordnungen kommt es dabei mitunter zu einer ungünstigen Aufsummation der Toleranzen der beteiligten Bauteile der Lagerung (Toleranzkette), was sich entsprechend nachteilig auswirkt.

Der Erfindung liegt daher die **Aufgabe** zugrunde, ein Lager der eingangs genannten Art so fortzubilden, dass es eine möglichst geringe Reibung aufweist. Ferner soll die Lageranordnung mit geringem Bauraum auskommen. Weiterhin soll die Präzision der Lageranordnung dadurch erhöht werden, dass die Toleranzkette verringert wird. Die Steifigkeit des Lagers soll dabei möglichst hoch sein, dies gilt auch für die statische und dynamische radiale und axiale Tragfähigkeit des Lagers. Das Lager soll weiterhin für Temperaturen bis zu 130 °C problemlos geeignet sein. Schließlich soll eine einfache Montage des Lagers möglich sein, wobei insbesondere auf aufwändige Abstimmarbeiten verzichtet können werden soll.

Die **Lösung** dieser Aufgabe durch die Erfindung ist dadurch gekennzeichnet, dass der Innenring zwei, drei oder vier Befestigungsbohrungen aufweist, die den Innenring vollständig axial durchsetzen und die äquidistant um die Drehachse des Lagers herum angeordnet sind.

Die Befestigungsbohrungen können beispielsweise eine Schraube aufnehmen, die zur Festlegung des Innenrings an einem angrenzenden Maschinenteil dienen.

Der Außenring kann an seinem radial außenliegenden Umfang einen zylindrischen Sitzabschnitt für ein Bauteil aufweisen. Bei dem Bauteil handelt es sich vorzugsweise um ein Zahnrad, wobei dieses mit Presspassung auf dem zylindrischen Sitzabschnitt angeordnet ist. Das Zahnrad kann insbesondere ein schrägverzahntes Stirnrad sein.

Eine bevorzugte Ausgestaltung des Lagers sieht vor, dass es als zweireihiges Wälzlager ausgebildet ist. Es kann insbesondere als Zylinderrollenlager ausgebildet sein.

Zur axialen Anlage der beiden Wälzkörperreihen können im axialen Endbereich des Innenrings zwei Borde vorhanden sein, wobei der eine Bord aus dem Material des Innenrings geformt ist und wobei der andere Bord durch eine Scheibe gebildet wird, die im axialen Endbereich des Innenrings befestigt ist.

Zur axialen Anlage der beiden Wälzkörperreihen können weiterhin im axial mittleren Bereich des Außenrings zwei Borde vorhanden sein, wobei die Borde aus dem Material des Außenrings geformt sind.

Im montierten Zustand kann das Lager unter radialer Vorspannung stehen, um eine hohe Lagerpräzision zu erzielen.

Jede Wälzkörperreihe kann von einem Käfig gehalten werden. Der Raum zwischen den Lagerringen kann in an sich bekannter Weise mittels mindestens einer Dichtung gegenüber der Umgebung abgedichtet sein.

Bevorzugte Anwendungsfälle des erfindungsgemäßen Lagers sind beispielsweise Baumaschinen und insbesondere die Trommellagerung eines Betonmischwagens.

Insbesondere durch die Integration eines Wellenstummels in den Innenring sowie die Integration eines Zahnrades, vorzugsweise mit einer Schrägverzahnung, in den Außenring durch Aufschrumpfen (Presspassung) kann das genannte Ziel der Erfindung erreicht werden. Es ergibt sich ein Außenring mit integriertem Zahnrad. Der Innenring hat infolge der massiven Ausbildung eine hohe Steifigkeit und Festigkeit.

Vorzugsweise ist die abgedichtete Lagereinheit auf Lebensdauer geschmiert ("greased for life"). Der Vorteil einer solchen abgedichteten und lebensdauergeschmierten Lösung ist, dass für den Betrieb der Lagerung in einer entsprechenden schweren maschinenbautechnischen Anwendung der Öldruck und die Ölmenge reduziert werden können und somit eine kleinere Ölpumpe, evtl. sogar eine Elektropumpe, zum Einsatz kommen kann. Dies hat wiederum den Vorteil einer Gewichtsreduzierung, so dass gegebenenfalls im Nebenantrieb Einsparungen möglich sind.

Die erfindungsgemäße Lageranordnung kann hohe Axialbelastungen aufnehmen. Die Aufnahme hoher radialer Belastungen ist durch eine radiale Vorspannung des Lagers im montierten Zustand erleichtert.

Die Toleranzkette zwischen Innenring und Zahnrad ist durch die vorgeschlagene Konstruktion wesentlich verkürzt, was einer hohen Präzision zuträglich ist. Die Montage gestaltet sich ebenfalls relativ einfach.

Von Vorteil ist schließlich die Erhöhung der Gebrauchsdauer der Lagerung. Dabei wird eine geringe Reibung erreicht, die der Kraftstoffeinsparung zuträglich ist.

In der Zeichnung ist ein Ausführungsbeispiel der Erfindung dargestellt. Es zeigen:
- Fig. 1: ein eine Verzahnung lagerndes Lager in der Ansicht B gemäß Fig. 2 und
- Fig. 2: das Lager gemäß Fig. 1 im Schnitt C-D gemäß Fig. 1.

In den Figuren ist ein Lager 1 dargestellt, das als zweireihiges Zylinderrollenlager ausgeführt ist. Es weist einen Innenring 2 und einen Außenring 3 auf; zwischen den Ringen 2, 3 sind zwei Wälzkörperreihen 4', 4" von Zylinderrollen 4 angeordnet.

Die Zylinderrollen 4 werden von einem Käfig 15 gehalten. Um die Wälzkörper 4 vor Verschmutzung zu schützen, ist eine Dichtung 16 in an sich bekannter Weise vorgesehen, mit der der Raum zwischen den Ringen 2, 3 gegen die Umgebung abgedichtet ist.

Damit das Lager 1 axiale Kräfte, also Kräfte in Achsrichtung A, übertragen kann, sind für die beiden Reihen Wälzkörper 4 axiale Anschläge in Form von Borden vorgesehen.

Am Innenring 2 ist im linken axialen Endbereich ein Bord 10 angeformt (s.

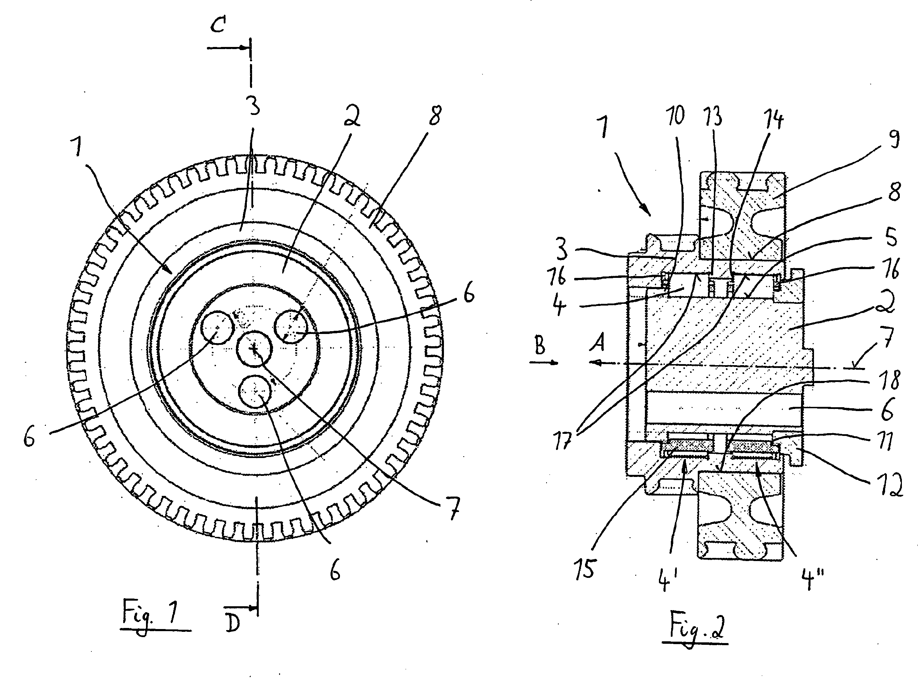

Fig. 2), der in die Laufbahn 5 für die Wälzkörper 4 übergeht; die Laufbahn 5 ist als zylindrischer Abschnitt ausgebildet.

Im rechten axialen Endbereich ist gleichermaßen ein Bord 11 vorgesehen. Dieser wird aus montagetechnischen Gründen jedoch durch eine Scheibe 12 realisiert, die im rechten axialen Endbereich des Innenrings 2 festgelegt ist.

Auch im Außenring 3 sind Borde für den axialen Anlauf der Zylinderrollen 4 ausgebildet. Hier sind zwei Borde 13 und 14 im mittleren axialen Bereich des Außenrings 3 ausgebildet, die in die jeweiligen Laufbahnen 17 des Außenrings 3 übergehen.

Ist das Lager 1 montiert, wie es in Fig. 2 zu sehen ist, wird somit eine in Achsrichtung A wirksame Lagerung durch die Zylinderrollen 4 und die Borde erreicht. Damit auch in radiale Richtung eine präzise Lagerfähigkeit gegeben ist, liegt im montierten Zustand des Lagers 1 eine radiale Vorspannung zwischen Innenring 2, Wälzkörpern 4 und Außenring 3 vor.

Damit ein Bauteil 9 - hier in Form eines schrägverzahnten Stirnrades - genau gelagert werden kann, ist das Bauteil 9 relativ zum Außenring 3 dadurch genau festgelegt, dass es mit einer zylindrischen Bohrung 18 auf einem zylindrischen Sitzabschnitt 8 des Außenrings 3 mit Presspassung angeordnet ist, d. h. das Zahnrad 9 ist auf dem zylindrischen Sitzabschnitt 8 des Außenrings 3 aufgeschrumpft.

Um eine präzise Lagerung bei geringer Reibung zu erreichen, ist der Innenring 2 in besonderer Weise fest ausgebildet. Hierzu ist vorgesehen, dass der Innenring 2 als massives Wellenteil ausgeführt ist. Das Wellenteil ist an seinem äußeren Umfang mit der Laufbahn 5 für die Zylinderrollen 4 versehen. Ferner weist der Innenring 2 sich in Achsrichtung A erstreckende Befestigungsbohrungen 6 auf.

Eine Befestigungsbohrung 6 ist in Fig. 2 im Schnitt zu sehen. Ansonsten ist aus Fig. 1 ersichtlich, dass vorliegend drei Bohrungen 6 um die Drehachse 7 des Lagers 1 herum äquidistant verteilt und exzentrisch zur Drehachse 7 angeordnet sind. Durch die Befestigungsbohrungen 6 können Schrauben gesteckt werden, so dass der Innenring stirnseitig an ein angrenzendes Maschinenteil angeschraubt werden kann.

### Bezugszeichenliste

- 1: Lager
- 2: Innenring
- 3: Außenring
- 4: Wälzkörper
- 4': Wälzkörperreihe
- 4": Wälzkörperreihe
- 5: Laufbahn
- 6: Befestigungsbohrung
- 7: Drehachse
- 8: zylindrischer Sitzabschnitt
- 9: Bauteil (Zahnrad)
- 10: Bord
- 11: Bord
- 12: Scheibe
- 13: Bord
- 14: Bord
- 15: Käfig
- 16: Dichtung
- 17: Laufbahn
- 18: Bohrung

- A: Achsrichtung

## Patentansprüche

1. Lager (1) mit einem Innenring (2) und einem Außenring (3), wobei zwischen den Ringen (2, 3) Wälzkörper (4) angeordnet sind, wobei der Innenring (2) als massives Wellenteil ausgeführt ist, das an seinem äußeren Umfang mindestens eine Laufbahn (5) für die Wälzkörper (4) hat und das sich in Achsrichtung (A) erstreckende Befestigungsbohrungen (6) aufweist, wobei die Befestigungsbohrungen (6) von der Drehachse (7) des Innenrings (2) radial versetzt angeordnet sind,
**dadurch gekennzeichnet, dass**
der Innenring (2) zwei, drei oder vier Befestigungsbohrungen (6) aufweist, die den Innenring (2) vollständig axial durchsetzen und die äquidistant um die Drehachse (7) des Lagers (1) herum angeordnet sind.

2. Lager nach Anspruch 1, **dadurch gekennzeichnet, dass** der Außenring (3) an seinem radial außenliegenden Umfang einen zylindrischen Sitzabschnitt (8) für ein Bauteil (9), insbesondere für ein Zahnrad, besonders bevorzugt für ein schrägverzahntes Stirnrad, aufweist.

3. Lager nach Anspruch 2, **dadurch gekennzeichnet, dass** zwischen dem Außenring (3) und dem Bauteil (9) Presspassung im zylindrischen Sitzabschnitt (8) vorliegt.

4. Lager nach einem der Ansprüche 1 bis 3, **dadurch gekennzeichnet, dass** es als zweireihiges Wälzlager ausgebildet ist.

5. Lager nach Anspruch 4, **dadurch gekennzeichnet, dass** es als Zylinderrollenlager ausgebildet ist.

6. Lager nach Anspruch 5, **dadurch gekennzeichnet, dass** zur axialen Anlage der beiden Wälzkörperreihen (4', 4") im axialen Endbereich des Innenrings (2) zwei Borde (10, 11) vorhanden sind, wobei der eine Bord (10) aus dem Material des Innenrings (2) geformt ist und wobei der andere Bord (11) durch eine Scheibe (12) gebildet wird, die im axialen Endbereich des Innenrings (2) befestigt ist.

7. Lager nach Anspruch 5 oder 6, **dadurch gekennzeichnet, dass** zur axialen Anlage der beiden Wälzkörperreihen (4', 4") im axial mittleren Bereich des Außenrings (3) zwei Borde (13, 14) vorhanden sind, wobei die Borde (13, 14) aus dem Material des Außenrings (3) geformt sind.

8. Lager nach einem der Ansprüche 1 bis 7, **dadurch gekennzeichnet, dass** es im montierten Zustand unter radialer Vorspannung steht.

9. Lager nach einem der Ansprüche 1 bis 8, dadurch gekennzeichet, dass jede Wälzkörperreihe (4', 4") von einem Käfig (15) gehalten wird.

10. Lager nach einem der Ansprüche 1 bis 9, **dadurch gekennzeichnet, dass** der Raum zwischen den Lagerringen (2, 3) mittels mindestens einer Dichtung (16) gegenüber der Umgebung abgedichtet ist.

11. Verwendung eines Lagers nach einem der Ansprüche 1 bis 10 in einer Baumaschine.

12. Verwendung eines Lagers nach einem der Ansprüche 1 bis 10 in der Trommellagerung eines Betonmischwagens.

## Claims

1. Bearing (1) having an inner ring (2) and having an outer ring (3), wherein rolling bodies (4) are arranged between the rings (2, 3), wherein the inner ring (2) is in the form of a solid shaft part which, on its outer circumference, has at least one raceway (5) for the rolling bodies (4) and which has fastening bores (6) extending in an axial direction (A), wherein the fastening bores (6) are arranged so as to be offset radially from the axis of rotation (7) of the inner ring (2),
**characterized in that**
the inner ring (2) has two, three or four fastening bores (6) which extend axially all the way through the inner ring (2) and which are arranged equidistantly around the axis of rotation (7) of the bearing (1).

2. Bearing according to Claim 1, **characterized in that** the outer ring (3) has, on its radially outer circumference, a cylindrical seat section (8) for a component (9), in particular for a gearwheel, particular preferably for a helically toothed spur gear.

3. Bearing according to Claim 2, **characterized in that** an interference fit is formed between the outer ring (3) and the component (9) in the cylindrical seat section (8).

4. Bearing according to one of Claims 1 to 3, **characterized in that** said bearing is in the form of a two-row rolling bearing.

5. Bearing according to Claim 4, **characterized in that** said bearing is in the form of a cylindrical roller bearing.

6. Bearing according to Claim 5, **characterized in that** two rims (10, 11) for the axial abutment of the two rolling body rows (4', 4") are provided in the axial end region of the inner ring (2), wherein one rim (10) is moulded from the material of the inner ring (2) and wherein the other rim (11) is formed by a disc (12) which is fastened in the axial end region of the inner ring (2).

7. Bearing according to Claim 5 or 6, **characterized in that** two rims (13, 14) for the axial abutment of the two rolling body rows (4', 4") are provided in the axially central region of the outer ring (3), wherein the rims (13, 14) are moulded from the material of the outer ring (3).

8. Bearing according to one of Claims 1 to 7, **characterized in that** said bearing is under radial preload in the assembled state.

9. Bearing according to one of Claims 1 to 8, **characterized in that** each rolling body row (4', 4") is retained by a cage (15).

10. Bearing according to one of Claims 1 to 9, **characterized in that** the space between the bearing rings (2, 3) is sealed off with respect to the environment by means of at least one seal (16).

11. Use of a bearing according to one of Claims 1 to 10 in a construction machine.

12. Use of a bearing according to one of Claims 1 to 10 in the drum bearing arrangement of a concrete mixer vehicle.

## Revendications

1. Palier (1) comprenant une bague intérieure (2) et une bague extérieure (3), des corps de roulement (4) étant disposés entre les bagues (2, 3), la bague intérieure (2) étant réalisée sous forme de partie d'arbre pleine qui présente, sur sa périphérie extérieure, au moins un chemin de roulement (5) pour les corps de roulement (4) et qui comprend des alésages de fixation (6) s'étendant dans la direction axiale (A), les alésages de fixation (6) étant disposés de manière décalée radialement de l'axe de rotation (7) de la bague intérieure (2),
**caractérisé en ce que**
la bague intérieure (2) comprend deux, trois ou quatre alésages de fixation (6) qui traversent axialement complètement la bague intérieure (2) et qui sont disposés de manière équidistante autour de l'axe de rotation (7) du palier (1).

2. Palier selon la revendication 1, **caractérisé en ce que** la bague extérieure (3) comprend, sur sa périphérie située radialement à l'extérieur, une portion de support (8) cylindrique pour un composant (9), en particulier pour une roue dentée, de manière particulièrement préférée pour une roue droite à denture hélicoïdale.

3. Palier selon la revendication 2, **caractérisé en ce qu'**un ajustement serré dans la portion de support (8) cylindrique est présent entre la bague extérieure (3) et le composant (9).

4. Palier selon l'une quelconque des revendications 1 à 3, **caractérisé en ce qu'**il est réalisé sous forme de palier à roulement à deux rangées.

5. Palier selon la revendication 4, **caractérisé en ce qu'**il est réalisé sous forme de palier à rouleaux cylindriques.

6. Palier selon la revendication 5, **caractérisé en ce que** deux épaulements (10, 11) sont présents dans la région d'extrémité axiale de la bague intérieure (2) en vue de l'appui axial des deux rangées de corps de roulement (4', 4"), l'un des épaulements (10) étant formé à partir du matériau de la bague intérieure (2) et l'autre épaulement (11) étant formé par un disque (12) qui est fixé dans la région d'extrémité axiale de la bague intérieure (2).

7. Palier selon la revendication 5 ou 6, **caractérisé en ce que** deux épaulements (13, 14) sont présents dans la région axialement centrale de la bague extérieure (3) en vue de l'appui axial des deux rangées de corps de roulement (4', 4"), les épaulements (13, 14) étant formés à partir du matériau de la bague extérieure (3).

8. Palier selon l'une quelconque des revendications 1 à 7, **caractérisé en ce qu'**il se trouve sous précontrainte radiale à l'état monté.

9. Palier selon l'une quelconque des revendications 1 à 8, **caractérisé en ce que** chaque rangée de corps de roulement (4', 4") est retenue par une cage (15) .

10. Palier selon l'une quelconque des revendications 1 à 9, **caractérisé en ce que** l'espace entre les bagues de palier (2, 3) est rendu étanche par rapport à l'environnement au moyen d'au moins un joint d'étanchéité (16).

11. Utilisation d'un palier selon l'une quelconque des revendications 1 à 10 dans une machine de chantier.

12. Utilisation d'un palier selon l'une quelconque des revendications 1 à 10 dans le palier de tambour d'un camion malaxeur de béton.
